# FASCICULE DE BREVET EUROPEEN

(11) **EP 2 997 751 B1**
(45) Date de publication et mention de la délivrance du brevet: **01.07.2020**
(21) Numéro de dépôt: 14732258.0
(22) Date de dépôt: 12.05.2014
(51) Int. Cl.: H04W 4/06

(54) **ADRESSE IP MULTICAST FIXE ET UNIQUE TPEG**
STATISCHE IP-MULTICAST-EINZELADRESSE FÜR TPEG
TPEG SINGLE STATIC IP MULTICAST ADDRESS

(30) Priorité: 13.05.2013 FR 1354256
(43) Date de publication de la demande: 23.03.2016
(73) Titulaire: TDF, 92120 Montrouge (FR)
(72) Inventeur: BEAUCHAMP, Frédéric, 35530 Noyal sur Vilaine (FR); POULBOT, Eric, 35320 Crevin (FR)
(74) Mandataire: Plasseraud IP
(86) Numéro de dépôt international: PCT/FR2014/051081
(87) Numéro de publication internationale: WO 2014/184473

(56) Documents cités:
- US-A1- 2009 040 957
- US-A1- 2009 073 912
- US-A1- 2009 125 219
- US-A1- 2010 017 839

## Description

La présente invention concerne le domaine de la diffusion de données d'aide au déplacement, et en particulier de données de type TPEG (pour « Transport Protocol Experts Group).

Elle trouve des applications dans des terminaux embarqués dans des véhicules ou encore dans tout terminal ayant des moyens d'accès à un réseau IP (pour « Internet Protocol » en anglais), tels que des ordinateurs portables ou fixes, des téléphones portables de type Smartphone, des PDAs, PNDs, des tablettes tactiles, etc.

TPEG est un groupe de normes définissant des méthodes pour transmettre en temps réel des données multimodales d'aide au déplacement.

TPEG comprend notamment les applications suivantes :
- RTM pour « Road Traffic Message » qui comprend des informations de trafic relatives à des accidents, retards ou bouchons;
- PTI pour « Public Transport Information » qui comprend des informations sur des transports publics tels que le train, le bus ou le trafic aérien;
- PKI pour « ParKing Information » qui diffuse des données d'aide au stationnement;
- CTT pour « Congestion and Travel-Time » ;
- TFP pour "Trafic Flow and Prédictions"
- TEC pour « Traffic Event Compact »; et
- WEA pour « WEAther Information for travellers ».

Le TPEG peut être transporté par voie radionumérique, via le système de radiodiffusion numérique DAB (pour « Digital Audio Broadcasting ») par exemple. Dans ce cas, le système DAB contient un descripteur de service. Cependant, une telle diffusion requiert que les terminaux d'utilisateurs soient compatibles DAB, ce qui n'est pas le cas de nombreux terminaux présents dans les véhicules automobiles ni de la plupart des terminaux portables tels que les téléphones mobiles.

Certains constructeurs automobiles équipent désormais leurs véhicules de terminaux aptes à accéder à une adresse URL fixe afin d'établir une liaison bidirectionnelle avec le constructeur, à partir de laquelle ce dernier peut diffuser des données TPEG qui lui sont spécifiques. Cependant, de par la nature propriétaire de la liaison, l'utilisateur ne peut accéder qu'à des services proposés par le constructeur qui sont limités et dédiés, ce qui n'est pas satisfaisant.

De manière complémentaire ou alternative, un utilisateur peut utiliser un terminal mobile ayant accès à un réseau IP afin de joindre des services tels que GoogleMaps™ par exemple. Un tel service ne présente cependant pas les avantages associés au groupe de normes TPEG. Par exemple, il ne permet pas d'accéder à des horaires des transports en commun d'une ville donnée et nécessite des manipulations de la part de l'utilisateur.

En outre, actuellement, aucune unification mondiale pour la signalisation de la diffusion de données TPEG n'est connue au niveau IP.

Le document US 2009/040957 divulgue un procédé pour pré-positionner des objets de données dans un groupe ou sous-groupe de terminaux de communication.

Le document US 2009/125219 divulgue un procédé de fourniture d'informations routières.

La présente invention vient améliorer la situation. L'invention est définie telle que dans l'objet des revendications indépendantes. Des modes de réalisation additionnels sont définis dans les revendications dépendantes.

Un premier aspect de l'invention concerne un terminal pour la réception de données de type TPEG, comprenant :
- une mémoire stockant une adresse IP multicast unique dédiée à la diffusion de données de type TPEG;
- une unité d'accès à un premier réseau IP, l'unité d'accès étant apte à émettre une requête d'abonnement pour l'adresse IP multicast unique pour recevoir, en réponse à la requête, des données de type TPEG ou un lien vers des données de type TPEG.

On entend par terminal tout terminal compatible TPEG comprenant des moyens d'accès à un réseau IP, via une interface radio, Wi-Fi, filaire, Bluetooth, etc. Il peut par exemple s'agir d'un téléphone portable de type Smartphone, d'un terminal embarqué dans un véhicule automobile, d'un ordinateur portable ou fixe, d'une tablette numérique, d'un PDA, d'un PND, etc.

L'invention prévoit ainsi la diffusion de données TPEG sous forme multicast dans un premier réseau IP, l'adresse IP multicast pouvant être stockée dans le terminal selon l'invention. Ainsi, l'invention peut avantageusement être mise en œuvre dans des terminaux non compatibles DAB, et permet une indépendance par rapport au constructeur du terminal. L'opérateur du premier réseau IP peut en outre permettre le transport de plusieurs flux sur le premier réseau pour l'adresse IP multicast. Le terminal peut alors disposer d'une unité de filtrage permettant la sélection d'au moins un des flux reçus suite à son abonnement, à partir d'une adresse IP source par exemple. L'invention rend en outre possible l'utilisation pour différents opérateurs d'une adresse IP multicast unique dédiée à la diffusion de données de type TPEG, ce qui permet la mise en place d'un système universel transfrontalier. Dans ce cas, quelle que soit la localisation du terminal, il peut recevoir, par l'émission d'une requête d'abonnement pour l'adresse IP multicast unique, des données de type TPEG transportées dans le réseau IP auquel il est connecté.

Selon un mode de réalisation, l'unité d'accès est apte à accéder à un deuxième réseau IP, à émettre une requête d'abonnement pour l'adresse IP multicast via le second réseau IP, et à recevoir des données de type TPEG.

Ainsi, l'invention prévoit une transition entre deux réseaux IP distincts, sur lesquels des données TPEG sont transportées, en envoyant une requête d'abonnement pour l'adresse IP multicast unique. Par exemple, les premier et second réseaux IP peuvent être des réseaux IP de pays différents. Les données TPEG étant des codes de tables, le terminal, une fois paramétré dans une langue spécifique, a connaissance des tables de conversion de ces codes vers la langue en question. Ainsi, même si l'utilisateur du terminal transite entre deux pays ayant des langues différentes, les données TPEG sont sous forme de codes et le terminal est apte à présenter les données dans la langue de l'utilisateur.

Un deuxième aspect de l'invention concerne un procédé mis en œuvre dans un terminal, le procédé comprenant les étapes suivantes :
- stockage en mémoire d'une adresse IP multicast unique dédiée à la diffusion de données de type TPEG ;
- émission d'une requête d'abonnement pour l'adresse IP multicast unique, via un premier réseau IP accessible depuis le terminal- réception, en réponse à la requête, de données de type TPEG ou un lien vers des données de type TPEG.

Selon un mode de réalisation, le procédé comprend en outre :
- accès à un deuxième réseau IP ;
- envoi d'une requête d'abonnement pour ladite adresse IP multicast via le second réseau IP;
- réception de données de type TPEG.

En complément, des premières données de type TPEG peuvent être diffusées dans le premier réseau IP par un premier serveur source, et des secondes données de type TPEG peuvent être diffusées dans le second réseau IP par un second serveur source.

Un troisième aspect de l'invention concerne un produit programme d'ordinateur comprenant des instructions de code de programme enregistrées sur un support lisible par un ordinateur, pour l'exécution des étapes du procédé selon le deuxième aspect de l'invention.

D'autres caractéristiques et avantages de l'invention apparaîtront à l'examen de la description détaillée ci-après, et des dessins annexés sur lesquels:
- la figure 1 illustre une architecture réseau pour le transport de données de type TPEG selon l'invention;
- la figure 2 illustre un terminal pour la réception de données de type TPEG selon un mode de réalisation de l'invention ;
- la figure 3 est un diagramme représentant des étapes d'un procédé de réception de données de type TPEG selon un mode de réalisation de l'invention.

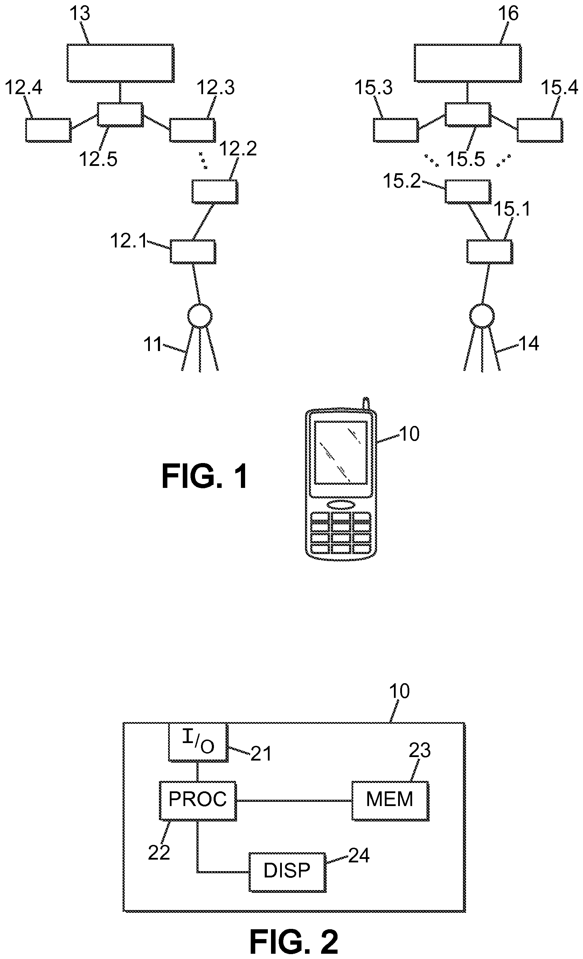

La figure 1 illustre une architecture de réseaux pour le transport de données de type TPEG, dans lequel un terminal 10 selon l'invention est apte à recevoir des données de type TPEG.

Bien que le terminal 10 représenté en figure 1 soit un téléphone mobile, de type Smartphone par exemple, l'invention n'est aucunement restreinte à ce type de terminal et englobe notamment des ordinateurs portables ou fixes, des tablettes numériques, des PDAs, PNDs, etc. Le terminal 10 peut notamment être un terminal embarqué dans un véhicule automobile, et peut être spécialement dédié à la réception de données de type TPEG.

Le terminal 10 selon l'invention peut accéder à des réseaux IP, selon différentes interfaces. La figure 2 illustre un terminal pour la réception de données de type TPEG selon un mode de réalisation de l'invention. Le terminal 10 comprend une interface d'entrée/sortie constituant une unité d'accès 21 à un réseau IP.

Sur la figure 1, un exemple particulier d'accès par liaison radio a été représenté. Toutefois, l'unité d'accès 21 peut être une interface filaire (câble Ethernet par exemple), une interface Wi-fi, une interface Bluetooth, ou toute autre interface connue.

Le terminal 10 comprend en outre une unité de traitement 22, de type processeur, qui a accès à une mémoire 23 dans laquelle est stockée une adresse IP multicast unique selon l'invention. A partir de l'adresse IP multicast stockée, le processeur peut générer une requête au format IGMP destinée à l'abonnement à l'IP multicast unique, en vue de rejoindre un groupe abonné à la diffusion de données de type TPEG. Selon l'invention, l'adresse IP multicast est unique, de manière à ce qu'un utilisateur du terminal 10 puisse requérir des données de type TPEG quel que soit le réseau IP auquel il a accès. Les données TPEG transportées à cette adresse IP multicast sont à l'initiative de l'opérateur du réseau auquel le terminal 10 est connecté, comme détaillé ultérieurement.

La requête d'abonnement ainsi formée peut être envoyée via l'unité d'accès 21 dans un premier réseau IP, pour abonnement à l'adresse IP multicast unique.

L'architecture de la figure 1 comprend un premier nœud 11 d'un premier réseau IP, en charge de la couverture radio d'une cellule du premier réseau IP. Les données sont véhiculées dans le réseau par l'intermédiaire d'un ensemble de routeurs 12.1, 12.2, 12.3, 12.4 et 12.5. La requête d'abonnement à l'adresse IP multicast unique est reçue par un premier routeur 12.1. Dans le cas où le premier routeur 12.1 est abonné au flux multicast correspondant à l'adresse IP multicast unique et reçoit des données de type TPEG adressées au groupe multicast, il stocke en mémoire le fait que le terminal 10 est abonné au flux multicast et, sur réception de données TPEG destinées au groupe multicast, les données TPEG sont transmises au terminal 10. Dans le cas contraire, le premier routeur 12.1 fait remonter la requête dans le premier réseau IP afin que le flux multicast correspondant à l'adresse IP multicast lui soit transmis. Le fonctionnement de la diffusion d'un flux de type multicast est bien connu et ne sera pas précisé plus en détails dans ce qui suit.

Le premier réseau IP comprend un premier serveur source 13 qui transmet le flux multicast correspondant à l'adresse IP multicast unique dans ce premier réseau IP. Le premier serveur source 13 est déterminé par l'opérateur en charge du premier réseau IP. L'opérateur du premier réseau IP peut par ailleurs décider qu'aucun flux n'est à diffuser dans ce réseau pour l'adresse IP multicast précitée. En outre, comme précédemment évoqué, plusieurs serveurs source peuvent diffuser des flux distincts pour l'adresse IP multicast unique.

Le premier serveur source 13 diffuse ainsi des données de type TPEG, à l'intention du groupe multicast préalablement abonné. Les données de type TPEG sont propagées dans le premier réseau IP par l'intermédiaire des routeurs 12.1 à 12.5.

Le premier réseau IP peut par exemple couvrir un territoire national et les données de type TPEG peuvent ainsi concerner ce territoire. De manière avantageuse dans le cadre de la diffusion de données de transport, l'opérateur du premier réseau IP peut prévoir que chaque région d'un territoire national peut posséder son propre serveur source et qu'ainsi, les données diffusées dans une région soit propre à cette région (réseau de transport en commun local, informations locales de trafic, etc). En tout état de cause, la même adresse IP multicast unique peut être utilisée par le terminal 10 pour requérir des données de type TPEG. En outre, aucune restriction n'est attachée au protocole utilisé pour le transport des données dans les réseaux IP: il peut par exemple s'agir des protocoles IPv4 ou IPv6. Par exemple, sous IPv4, les adresses 224.0.0.0 à 239.255.255.255 sont utilisées en tant qu'adresses Multicast.

Ainsi, une fois la requête IGMP émise par le terminal 10, ce dernier reçoit les données de type TPEG transmises par le premier serveur source 13 (et éventuellement d'autres flux de données issus d'autres serveurs source). Comme discuté précédemment, l'invention s'applique également lorsque le terminal est relié à un réseau IP par une interface autre qu'une liaison radio.

Le transport de données TPEG peut également nécessiter la prise en compte d'une mobilité de l'utilisateur du terminal 1. Ainsi, dans le cas où le terminal 10 est embarqué dans un véhicule automobile, une transition vers un second réseau IP est susceptible de se produire (par exemple, lors du passage dans un autre pays). Un second réseau IP est illustré sur la figure 1. Le second réseau IP comprend un second nœud 14 du réseau à partir duquel le terminal 10 peut accéder au second réseau IP par voie radio. Le second réseau IP comprend en outre un ensemble de routeurs 15.1 à 15.5 pour la propagation de données. L'opérateur en charge du second réseau IP peut décider que les données transportées à l'adresse IP multicast précitée sont issues d'un second serveur source 16. D'autres serveurs source peuvent également émettre des données à l'adresse IP multicast unique. L'utilisateur du terminal reçoit ainsi des données TPEG pertinentes (correspondant au réseau dans lequel il est localisé). En outre, l'utilisateur n'a pas à entrer une nouvelle adresse pour recevoir des données TPEG, la même adresse IP multicast unique étant utilisée pour générer une nouvelle requête IGMP pour s'abonner au flux multicast dans le second réseau IP.

Un tel changement de réseau IP peut également concerner des ordinateurs fixes ou portables, lors de la transition d'un premier réseau IP vers un deuxième réseau IP. La transition opérée selon l'invention n'est par conséquent pas restreinte à un changement de cellules dans un accès de type radio.

Sur réception de données TPEG depuis la cellule 11, ou la cellule 14, selon le réseau courant auquel accède le terminal 10, l'unité de traitement 22 du terminal 10 traite ces données TPEG. Les données TPEG étant des codes de table, l'unité de traitement 22, une fois paramétrée dans une langue spécifique, connaît les tables de conversion de ces codes vers la langue en question, et est ainsi apte à rendre les données TPEG restituables dans une langue donnée via une unité d'affichage 24 (un écran par exemple) ou un Haut-Parleur du terminal 10. Les données TPEG peuvent se présenter sous la forme d'un ou de plusieurs multiplex TPEG. En lieu et place des données TPEG, l'invention prévoit que des liens vers des données TPEG soient reçus par le terminal 10, qui est alors apte à récupérer les données TPEG requises dans le réseau IP à partir de ces liens.

Ainsi, même dans le cas illustré sur la figure 1, d'une transition d'un premier réseau IP à un second réseau IP, pouvant couvrir des pays différents, les données restituées par l'unité d'affichage 24 sont toujours dans la langue choisie par l'utilisateur.

La présente invention permet ainsi, par l'utilisation d'une adresse IP multicast unique, dédiée à la diffusion de données de type TPEG et stockée en mémoire 23 d'un terminal 10, de proposer un système d'acquisition de données TPEG universel transfrontalier : quelle que soit la localisation du terminal 10, il est apte à recevoir des données de type TPEG en s'abonnant à l'adresse IP multicast unique dans le réseau IP courant auquel il a accès. En outre, l'invention permet de rendre l'accès aux données TPEG indépendantes du constructeur du terminal et/ou du véhicule dans le cas d'un terminal embarqué.

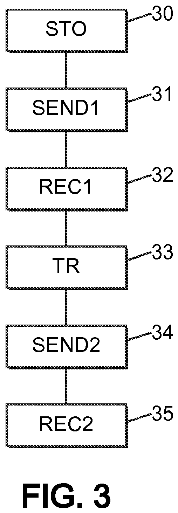

La figure 3 est un diagramme représentant des étapes d'un procédé de réception de données de type TPEG selon un mode de réalisation de l'invention.

A une étape 30, l'adresse IP multicast unique est stockée en mémoire du terminal 10. Aucune restriction n'est attachée à la manière d'acquérir l'adresse IP multicast. Elle peut être insérée dès la fabrication du terminal ou encore être mémorisée suite à une saisie initiale de l'utilisateur.

A une étape 31, une requête d'abonnement au format IGMP est générée et envoyée dans un premier réseau IP auquel le terminal 10 a accès, pour l'adresse IP multicast unique, en vue de s'abonner au flux multicast diffusé dans le premier réseau IP. Des données de type TPEG, ou des liens vers de telles données, sont ensuite reçues à une étape 32 par le terminal 10, en vue d'être restituées après traitement par l'unité de traitement 22.

A une étape hypothétique 33, une transition est opérée par le terminal 10 en vue d'accéder à un second réseau IP. Une nouvelle requête d'abonnement IGMP est émise pour l'adresse IP multicast unique via le second réseau IP à une étape 34. Le terminal 10 est alors abonné au flux multicast dans le second réseau IP et reçoit à une étape 35 des données TPEG ou des liens vers des données TPEG.

Le diagramme de la figure 3 illustre également un organigramme d'instructions de code comprises dans un produit programme d'ordinateur et enregistrées sur un support lisible par ordinateur.

## Revendications

1. Terminal pour la réception de données de type Transport Protocol Experts Group, TPEG, comprenant :
- une mémoire (23) stockant une adresse IP multicast unique pour la diffusion de données de type TPEG ;
- une unité d'accès (21) à un premier réseau IP, ladite unité d'accès étant apte à émettre une requête d'abonnement pour ladite adresse IP multicast unique, et pour recevoir, en réponse à ladite requête, des données de type TPEG ou un lien vers des données de type TPEG ;
dans lequel l'unité d'accès (21) est apte à accéder à un deuxième réseau IP, à envoyer une requête d'abonnement pour ladite adresse IP multicast unique via le second réseau IP, et à recevoir des données de type TPEG ou un lien vers des données de type TPEG.

2. Procédé de réception de données de type Transport Protocol Experts Group, TPEG, ledit procédé étant mis en œuvre dans un terminal, ledit procédé comprenant les étapes suivantes :
- stockage (30) en mémoire d'une adresse IP multicast unique pour la diffusion de données de type TPEG ;
- envoi (31), via un premier réseau IP accessible depuis le terminal, d'une requête d'abonnement pour ladite adresse IP multicast unique ;
- réception (32), en réponse à ladite requête, de données de type TPEG propres au premier réseau IP ou un lien vers des données de type TPEG propres au premier réseau IP ;
- accès (33) à un deuxième réseau IP ;
- envoi (34) d'une requête d'abonnement pour ladite adresse IP multicast unique via le second réseau IP;
- réception (35) de données de type TPEG ou un lien vers des données de type TPEG.

3. Procédé selon la revendication 2, dans lequel des premières données de type TPEG sont diffusées dans ledit premier réseau IP par un premier serveur source (13), et dans lequel des secondes données de type TPEG propres sont diffusées dans ledit second réseau IP par un second serveur source (16).

4. Produit programme d'ordinateur comprenant des instructions de code de programme enregistrées sur un support lisible par un ordinateur qui, lorsque le programme est exécuté par l'ordinateur, conduisent celui-ci à mettre en ouvre les étapes du procédé selon l'une quelconque des revendications 2 et 3.

## Patentansprüche

1. Terminal zum Empfang von Daten vom Typ "Transport Protocol Experts Group", TPEG, umfassend:
- einen Speicher (23), in dem eine eindeutige IP-Multicast-Adresse zur Verbreitung von Daten vom Typ TPEG gespeichert ist;
- eine Zugangseinheit (21) zu einem ersten IP-Netzwerk, wobei die Zugangseinheit dazu in der Lage ist, eine Abonnement-Anforderung für die eindeutige IP-Multicast-Adresse zu senden, und als Antwort auf diese Anforderung Daten vom Typ TPEG oder einen Link zu Daten vom Typ TPEG zu empfangen;
wobei die Zugangseinheit (21) dazu in der Lage ist, auf ein zweites IP-Netzwerk zuzugreifen, eine Abonnement-Anforderung für die eindeutige IP-Multicast-Adresse über das zweite IP-Netzwerk zu senden, und Daten vom Typ TPEG oder einen Link zu Daten vom Typ TPEG zu empfangen.

2. Verfahren zum Empfangen von Daten vom Typ "Transport Protocol Experts Group", TPEG, wobei das Verfahren in einem Terminal durchgeführt wird, wobei das Verfahren die folgenden Schritte umfasst:
- Speichern (30) einer eindeutigen IP-Multicast-Adresse zur Verbreitung von Daten vom Typ TPEG;
- Senden (31) einer Abonnement-Anforderung für die eindeutige IP-Multicast-Adresse über ein erstes IP-Netzwerk, das vom Terminal aus zugänglich ist;
- Empfangen (32) von Daten vom Typ TPEG, die für das erste IP-Netzwerk spezifisch sind, oder von einem Link zu Daten vom Typ TPEG, die für das erste IP-Netzwerk spezifisch sind, als Antwort auf diese Anforderung;
- Zugreifen (33) auf ein zweites IP-Netzwerk;
- Senden (34) einer Abonnement-Anforderung für die eindeutige IP-Multicast-Adresse über das zweite IP-Netzwerk;
- Empfangen (35) von Daten vom Typ TPEG oder von einem Link zu Daten vom Typ TPEG.

3. Verfahren nach Anspruch 2, wobei die ersten Daten vom Typ TPEG in dem ersten IP-Netzwerk von einem ersten Quell-Server (13) verbreitet werden, und wobei die spezifischen zweiten Daten vom Typ TPEG in dem zweiten IP-Netzwerk von einem zweiten Quell-Server (16) verbreitet werden.

4. Computerprogrammprodukt, umfassend Programmcode-Anweisungen, die auf einem Medium aufgezeichnet sind, das von einem Computer lesbar ist, und die dann, wenn das Programm auf dem Computer durchgeführt wird, diesen dazu veranlassen, die Schritte des Verfahrens gemäß einem der Ansprüche 2 und 3 auszuführen.

## Claims

1. Terminal for receiving data of the Transport Protocol Experts Group (TPEG) type, comprising:
- a memory (23) storing a unique multicast IP address for broadcasting TPEG data;
- a unit (21) for accessing a first IP network, said access unit being capable of emitting a subscription request for said unique multicast IP address, and for receiving, in response to said request, TPEG data or a link to TPEG data;
wherein the unit for accessing (21) is able to access a second IP network, to send a subscription request for said unique multicast IP address via the second IP network, and to receive TPEG data or a link to TPEG data.

2. Method for receiving Transport Protocol Experts Group (TPEG) data, said method being implemented in a terminal, said method comprising the following steps:
- storing (30) in memory a unique multicast IP address for broadcasting TPEG data;
- sending (31), via a first IP network which can be accessed from the terminal, a subscription request for said unique multicast IP address;
- receiving (32), as a response to said request, TPEG data specific to the first IP network or a link to TPEG data specific to the first IP network;
- accessing (33) a second IP network;
- sending (34) a subscription request for said unique multicast IP address via the second IP network;
- receiving (35) TPEG data or a link to TPEG data.

3. Method according to claim 2, wherein first TPEG data is broadcast in said first IP network by a first source server (13), and wherein second specific TPEG data is broadcast in said second IP network by a second source server (16).

4. Computer program product comprising program code instructions recorded on a computer-readable medium which, when the program is executed by the computer, make the latter implement the steps of the method according to any of claims 2 and 3.
